# EUROPÄISCHE PATENTSCHRIFT

(11) **EP 1 609 999 B1**
(45) Veröffentlichungstag und Bekanntmachung des Hinweises auf die Patenterteilung: **01.12.2010**
(21) Anmeldenummer: 05009842.5
(22) Anmeldetag: 04.05.2005
(51) Int. Cl.: F04D 29/68, F04D 27/02

(54) **Strömungsarbeitsmaschine**
Turbo machine
Turbo machine

(30) Priorität: 24.06.2004 DE 102004030597
(43) Veröffentlichungstag der Anmeldung: 28.12.2005
(73) Patentinhaber: Rolls-Royce Deutschland Ltd & Co KG, 15827 Dahlewitz (DE)
(72) Erfinder: Gümmer, Volker, 15831 Mahlow (DE)
(74) Vertreter: Weber, Joachim

(56) Entgegenhaltungen:
- EP-A- 0 633 392
- EP-A- 1 286 022
- CH-A- 204 331
- DE-A1- 1 964 057
- DE-C- 976 186
- FR-A- 1 263 010
- FR-A- 1 454 266
- GB-A- 2 058 222
- US-A- 2 393 042
- US-A- 2 653 754
- US-A- 2 690 293
- US-A- 3 123 283
- US-A- 4 883 404
- US-A- 6 125 626

## Beschreibung

Die Erfindung bezieht sich auf eine Strömungsarbeitsmaschine gemäß den Merkmalen des Oberbegriffs des Hauptanspruchs.

Im Einzelnen betrifft die Erfindung eine Strömungsarbeitsmaschine mit zumindest einem Stator und mindestens einem stromab angeordneten Rotor, wobei der Stator mit feststehenden Statorschaufeln versehen ist und der Rotor mehrere an einer rotierenden Welle befestigte Rotorschaufeln umfasst. Es existiert ein Gehäuse, welches die Durchströmung des Rotors und des Stators mit einem Fluid nach außen begrenzt.

Die aerodynamische Belastbarkeit und die Effizienz von Strömungsarbeitsmaschinen, beispielsweise Bläsern, Verdichtern, Pumpen und Ventilatoren, wird insbesondere durch das Wachstum und die Ablösung von Grenzschichten im Rotorspitzenbereich nahe der Gehäusewand begrenzt. Der Stand der Technik hält für dieses Problem nur bedingt Lösungen bereit. Es existieren zahlreiche Konzepte zur Fluidzufuhr an Turbinenschaufeln, doch sind diese nicht auf Strömungsarbeitsmaschinen übertragbar, da sie im Wesentlichen der Oberflächenkühlung und nicht der Grenzschichtenergetisierung dienen. Es existiert für Rotoren ein Konzept zur Luftzufuhr an Nabe und Gehäuse durch achsensymmetrisch angeordnete Schlitze, um die dortigen Wandgrenzschichten zu beeinflussen. Schließlich gibt es Veröffentlichungen, die Konzepte aufzeigen, bei denen Rotoren in Gehäusenähe aus einzelnen Düsen angeblasen werden, um die dortige Radialspaltströmung günstig zu beeinflussen. Der allgemeine Gedanke der Grenzschichtbeeinflussung durch Einblasung bzw. Fluidzufuhr ist somit im Stand der Technik enthalten, doch sind die bekannten Lösungen trivial, nur bedingt effektiv und in ihrer praktischen Anwendbarkeit sehr begrenzt.

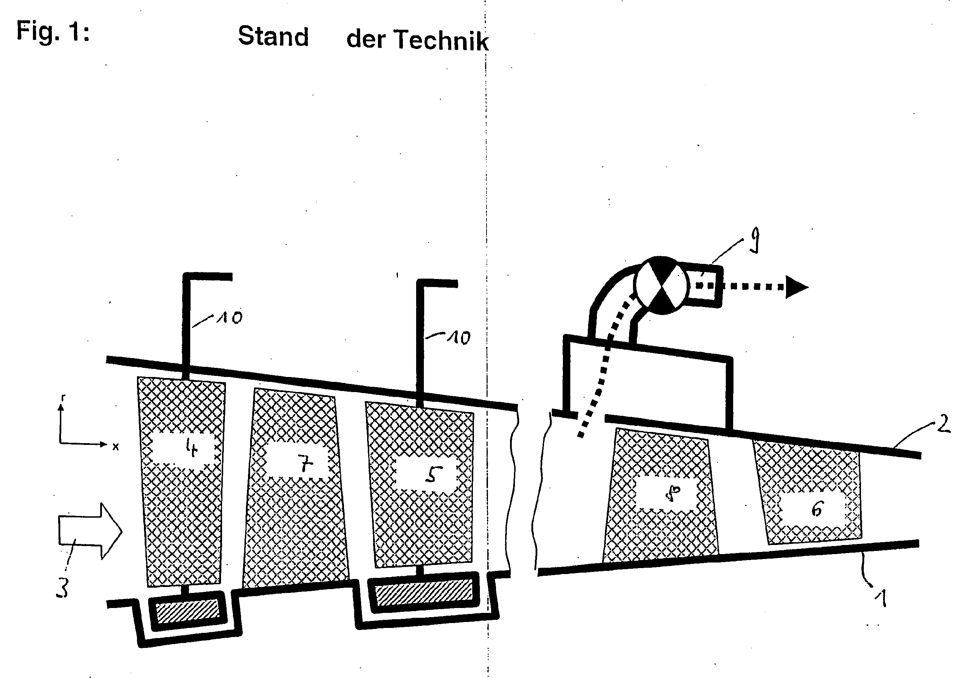

Die Fig. 1 zeigt in schematischer Darstellung den Stand der Technik von in der Anwendung stehenden Strömungsarbeitsmaschinen am Beispiel einer mehrstufigen Konfiguration. Gezeigt sind in schematischer Darstellung eine Nabe 1 und ein Gehäuse 2, zwischen welchen ein Fluid, wie durch den großen Pfeil 3 dargestellt, von links anströmt. Weiterhin sind als Ausschnitt einer mehrstufigen Strömungsarbeitsmaschine zweieinhalb Stufen dargestellt, hier mit einem Stator 4 beginnend und einem Stator 6 abschließend. Zwischen den Statoren sind Rotoren 7 und 8 angeordnet. Dabei sind die ersten dargestellten Statoren 4, 5 verstellbar 10 ausgeführt, um einen hinreichenden Betriebsbereich der Maschine zu gewährleisten. Unterstützend und demselben Zweck dienend, existiert eine Fluidabblasevorrichtung 9 zwischen den Stufen. Diese konstruktiven Merkmale sind mit einem hohen Kosten- und Bauaufwand verbunden.

Als nachteilig erweist sich beim Stand der Technik, dass realisierbare Strömungsarbeitsmaschinen einen beträchtlichen Kosten- und Bauaufwand erfordern, um einen hinreichend weiten Betriebsbereich, insbesondere bei Teillast, sicherstellen zu können. Einfache existierende Konzepte zur Anblasung von Rotorspitzen sind mit einer Mehrstufenbauweise nicht verträglich, da sie zusätzlichen Bauraum in Anspruch nehmen und die Anforderungen an die Betriebsicherheit nicht erfüllen.

Die EP-A-1 286 022 beschreibt eine Strömungsarbeitsmaschine mit einem von einer rotierenden Nabe und einem Gehäuse berandeten Hauptströmungspfad, in welchem mindestens eine Reihe von Statorschaufeln und eine stromab der Statorschaufelreihe angeordnete Reihe von Rotorschaufeln vorgesehen sind, wobei die Rotorschaufeln an ihrem radial inneren Ende mit der rotierenden Nabe verbunden sind, wobei das Gehäuse den Hauptströmungspfad nach radial außen begrenzt und zwischen dem Gehäuse und den Enden der Rotorschaufeln ein Laufspalt vorgesehen ist, wobei im Bereich mindestens einer Statorschaufel am radial äußeren Rand des Hauptströmungspfades mindestens eine Düse angeordnet ist. Die Austrittsöffnungen der Düsen befinden sich dementsprechend stromab der Statorhinterkante, wobei die Kanäle im Bereich der Austrittsöffnungen bündig mit der Hauptströmungspfadkontur ausgebildet sind, so dass sich eine Einströmrichtung schräg oder in einem Winkel zu Hauptströmung ergibt.

Die US-A-6 125 626 beschreibt eine zur Vibrationsreduzierung in Gebläsen von Triebwerken vorgesehene Anordnung mehrerer Luftzufuhrkanäle, deren Austrittsöffnungen im unbeschaufelten Raum zwischen dem Stator und dem Rotor vorgesehen sind. Die Luft wird senkrecht zur Gehäusewand und zum Hauptstrom eingeleitet.

Die CH 204 331 A beschreibt einen Turboverdichter mit Absaugkanälen am Rand des Hauptströmungspfades, welche Regionen höheren Drucks mit Zonen geringeren Drucks verbinden und eine Rezirkulation von Luft ermöglichen. Absaugung und Wedereinströmen geschehen stets an derselben Schaufelreihe des Rotors oder Stators.

Die FR-A-1 454 266 beschreibt einen Ventilator mit einer Luftrückführung zu einer Anzahl von am Umfang verteilten Austrittsöffnungen, durch welche die rückgeführte Luft schräg zur Hauptströmungsrichtung ausgeleitet wird.

Die FR-A-1 263 010 beschreibt eine Fluidmaschine in Form eines Verdichters mit hohlen Schaufeln, in denen in dem Schaufelprofil im Bereich der Profilhinterkante eine Luftzufuhr oder Luftabsaugung vorgesehen ist.

Die EP-A-0 633 392 beschreibt eine Schaufel mit variabler Wölbung für den Einsatz in Turbomaschinen, welche Kanäle und Hohlräume aufweist, durch welche Luft zur Kühlung geleitet wird.

Der vorliegenden Erfindung liegt die Aufgabe zugrunde, eine Strömungsarbeitsmaschine der eingangs genannten Art zu schaffen, welche unter Vermeidung der Nachteile des Standes der Technik eine wirkungsvolle Grenzschichtbeeinflussung durch gezielte und wohlplatzierte Randstrahlerzeugung sowie einen hohen Wirkungsgrad aufweist.

Erfindungsgemäß wird die Aufgabe durch die Merkmalskombination des Hauptanspruchs gelöst, die Unteransprüche zeigen weitere vorteilhafte Ausgestaltungen der Erfindung.

Erfindungsgemäß ist somit vorgesehen, dass im Bereich mindestens einer Schaufel des Stators Mittel zur Randstrahlerzeugung mit zumindest einer Fluid an der radial äußeren Begrenzung eines Hauptströmungspfades ausleitenden Düse vorgesehen sind.

Die vorliegende Erfindung bezieht sich somit auf Verdichter, sowohl in axialer, halbaxialer, als auch in radialer Bauart.

Die erfindungsgemäße Strömungsarbeitsmaschine kann eine oder mehrere Stufen mit jeweils einem Rotor und einem Stator umfassen.

Erfindungsgemäß besteht der Rotor aus einer Anzahl von Schaufeln, die mit der rotierenden Welle der Strömungsarbeitsmaschine verbunden sind und Energie an das Arbeitsmedium abgeben.

Erfindungsgemäß kann die Strömungsarbeitsmaschine vor dem ersten Rotor eine besondere Form eines Stators, ein sogenanntes Vorleitrad, aufweisen.

Erfindungsgemäß ist mindestens ein Stator oder Vorleitrad abweichend von der unbeweglichen Fixierung drehbar gelagert, um den Anströmwinkel zu verändern. Eine Verstellung erfolgt beispielsweise durch eine von außerhalb des Ringkanals zugängliche Spindel.

In besonderer Ausgestaltung kann die Strömungsarbeitsmaschine mindestens eine Reihe verstellbarer Rotoren aufweisen. Erfindungsgemäß kann die Strömungsarbeitsmaschine alternativ auch eine Nebenstromkonfiguration derart aufweisen, dass sich der einstromige Ringkanal hinter einer bestimmten Schaufelreihe in zwei konzentrische Ringkanäle aufteilt, die ihrerseits mindestens jeweils eine weitere Schaufelreihe umfassen.

Erfindungsgemäß ist somit im Einzelnen eine Strömungsarbeitsmaschine geschaffen worden, die Mittel zur Randstrahlerzeugung im Bereich mindestens einer Schaufel einer Statorreihe umfasst, derart, dass die zur Strahlerzeugung erforderliche Austrittsöffnung (Düse) an der äußeren Begrenzung des Hauptströmungspfades in ein Statorbauteil eingebettet ist oder mindestens teilweise durch ein Statorbauteil begrenzt wird.

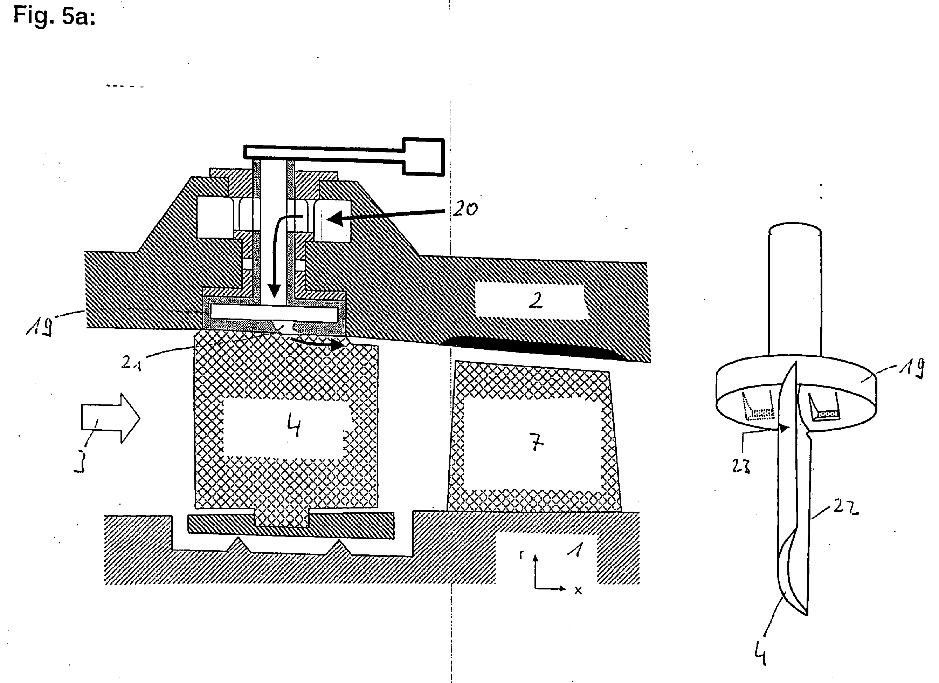

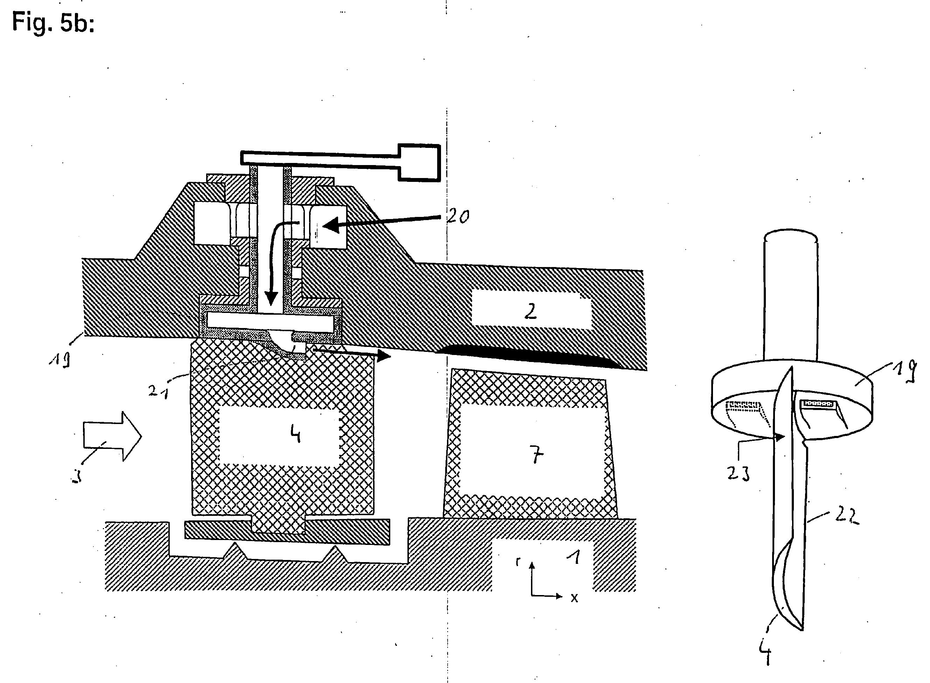

Im Folgenden werden Beispiele von Randstrahlerzeugungsdüsen in Verbindung mit den Figuren beschrieben, wobei lediglich die Figuren 5a und 5b die Erfindung betreffen. Dabei zeigt:
- Fig. 1:: eine schematische Darstellung des Standes der Tech- nik;
- Fig. 2:: eine schematische Darstellung des Grundkonzeptes;
- Fig. 3:: verschiedene Varianten und Konfigurationen der erfin- dungsgemäßen Strömungsarbeitsmaschine;
- Fig. 4a:: eine Anordnung mit statoreingebette- ter Düse (wandbündig) und Fluidversorgung durch den Statorfuß, Meridianansicht und räumliche Ansicht des Stators;
- Fig. 4b:: eine Anordnung mit statoreingebette- ter Düse (wandbündig) und Fluidversorgung durch den Statorfuß, Ansicht A-A in Fig. 4a;
- Fig. 4c:: eine Anordnung mit statoreingebette- ter Düse (vorstehend) und Fluidversorgung durch den Statorfuß, Meridianansicht und räumliche Ansicht von Statorvarianten;
- Fig. 4d:: eine alternative Anordnung mit sta- toreingebetteter Düse (vorstehend) und Fluidversor- gung durch den Statorfuß, Meridianansicht;
- Fig. 4e:: eine alternative Anordnung mit sta- toreingebetteter Düse (vorstehend) und Fluidversor- gung durch den Statorfuß, Ansicht A-A in Fig. 4d;
- Fig. 4f:: eine alternative Anordnung mit sta- toreingebetteter Düse (vorstehend) und Fluidversor- gung durch den Statorfuß, räumliche Ansicht von Sta- torvarianten;
- Fig. 5a:: eine erfindungsgemäße Anordnung mit statoreingebette- ter Düse (wandbündig) und Fluidversorgung durch die Statorverstellspindel, Meridianansicht und räumliche Ansicht des Stators;
- Fig. 5b:: eine erfindungsgemäße Anordnung mit statoreingebette- ter Düse (vorstehend) und Fluidversorgung durch die Statorverstellspindel, Meridianansicht und räumliche Ansicht des Stators;
- Fig. 6a:: eine Anordnung mit statorangrenzen- der Düse (wandbündig) und Fluidversorgung durch den Statorfuß, Meridianansicht und räumliche Ansicht von Statorvarianten;
- Fig. 6b:: eine Anordnung mit statorangrenzen- der Düse (vorstehend) und Fluidversorgung durch den Statorfuß, Meridianansicht;
- Fig.: 6c: eine Anordnung mit statorangrenzen- der Düse (wandbündig) und Fluidversorgung durch die Gehäuseperipherie, Meridianansicht und räumliche An- sicht des Stators;
- Fig. 6d:: eine Anordnung mit statorangrenzen- der Düse (vorstehend) und Fluidversorgung durch die Gehäuseperipherie, Meridianansicht;
- Fig. 7a:: eine wandbündige Düsenform mit direkter Einmündung in den Hauptströmungspfad;
- Fig. 7b:: eine wandbündige Düsenform mit überschwingender Ein- mündung in den Hauptströmungspfad.

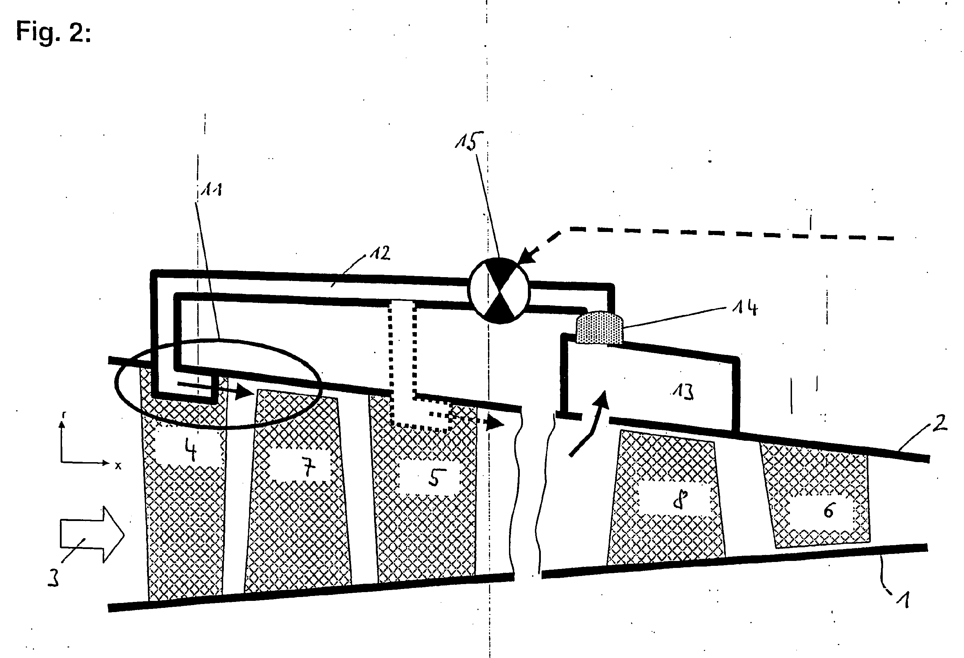

Die Fig. 2 zeigt in stark vereinfachter Darstellung eine Lösung an einem Ausschnitt aus einer mehrstufigen Strömungsarbeitsmaschine. Kern der Lösung ist die im Bereich mindestens eines Stators 4 vorgesehene und baulich in die Konstruktion des Stators integrierte Vorrichtung zur Erzeugung eines Fluidstrahls, der am Rand des Hauptströmungspfades entsteht und im Wesentlichen parallel zum Gehäuse ausgerichtet ist (statorintegrierte Randstrahlerzeugung 11). Diese Funktionseinheit kann in besonderer Ausführung über einen Strömungsweg (Leitung 12) mit einer weiter stromab gelegenen Stelle am Hauptströmungspfad (z.B. einer Kammer 13 zur Zwischenstufenabblasung) in Verbindung stehen und von dort gespeist werden. In weiterer besonderer Ausführung befindet sich im Verlauf der Rückführleitung eine frei gestaltbare Filtervorrichtung 14. In weiterer besonderer Ausführung befindet sich im Verlauf der Rückführleitung ein Drosselorgan 15 oder ein steuerbares Ventil. Dieses kann, wie mit dem gestrichelten Pfeil angedeutet, über einen Mechanismus vorhandener Verstell-Statoren angesteuert werden. In weiterer besonderer Ausführung wird die Steuerung des Ventils 15 über eine frei gestaltbare mechanische oder hydraulische Verbindung zu einem vorhandenen Mechanismus 16 zur Bewegung von Verstell-Statoren vorgesehen. Auf diese Weise kann eine einfache Steuerung in Abhängigkeit der Rotordrehzahl erfolgen.

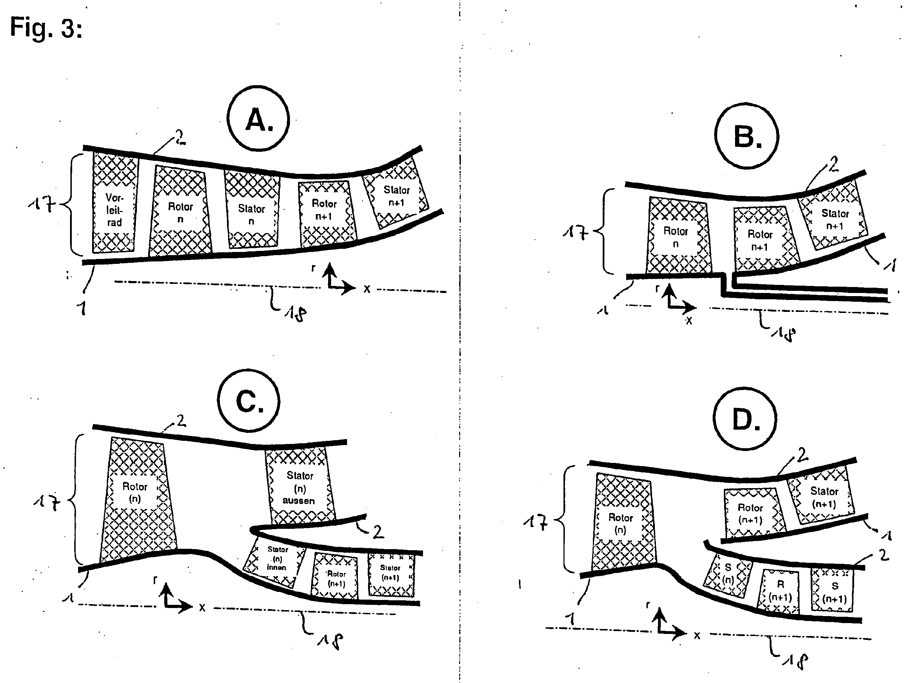

Die Fig. 3 zeigt vier von zahlreichen möglichen Konfigurationen der erfindungsgemäßen Strömungsarbeitsmaschine. Es ist ein von links nach rechts zu durchströmender Ringkanal sowie die Maschinenachse 18 dargestellt, um welche sich eine Rotortrommel (Nabe 1) dreht. Bei den in Fig. 3b und 3d gezeigten Ausführungsbeispielen ist eine weitere Rotortrommel (Nabe 1) vorgesehen. Die Rotoren, Statoren sowie das Vorleitrad sind jeweils in schematischer Weise dargestellt.

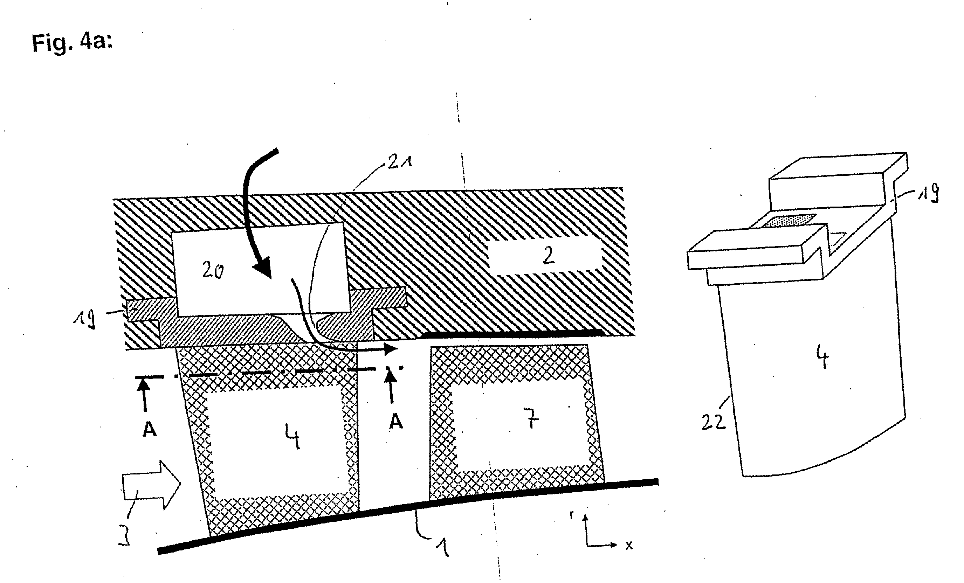

Die Fig. 4a zeigt eine Anordnung eines Stators 4 mit einem nachfolgenden Rotor 7, umgeben von einem Gehäuse 2. Es wird somit eine Anordnung mit statoreingebetteter Düse (wandbündig) und Fluidversorgung durch den Statorfuß gezeigt, in Meridianansicht, sowie eine räumliche Ansicht des Stators. Der Stator 4 besitzt eine feste Verbindung zum Gehäuse 2. Der Rotor 7 weist in der gewählten Darstellung zwischen seiner Spitze und dem Gehäuse 2 einen Laufspalt auf, wenn auch eine Rotorausführung mit Spitzendeckband vorsehbar ist. Der Statorfuß 19 und das Gehäuse 2 bilden eine Fluidversorgungskammer 20, die über einen Strömungsweg und eine Düse 21 in den Hauptströmungspfad mündet. Dabei ist die Düse 21 vollständig in das Statorbauelement eingebettet und besitzt eine wandbündige, besonders störungsarme Konfiguration. Fluid strömt so aus der Versorgungskammer 20 durch den Schaufelfuß (Statorfuß 19) in den Hauptströmungspfad auf die Spitze des Rotors 7 zu. Zur weiteren Verdeutlichung ist auf der rechten Bildseite eine Statorschaufel räumlich dargestellt. Die Vorderkante ist mit 22 bezeichnet. In dieser und folgenden Darstellungen ist die einzelne Schaufel mit Fuss entweder als separates Bauteil oder als Abschnitt eines größeren Schaufelverbundes zu betrachten.

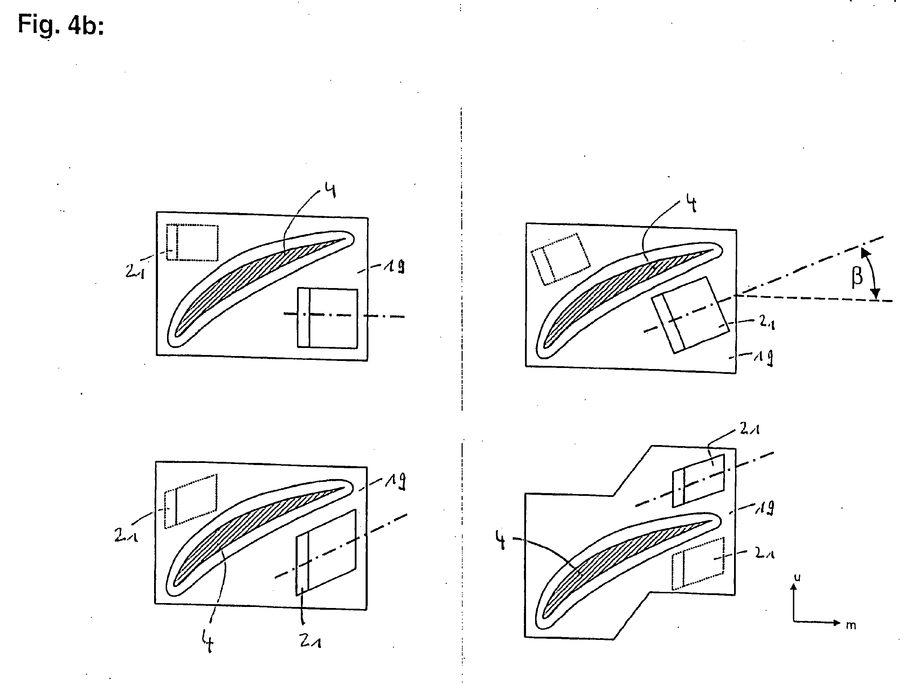

Die Fig. 4b zeigt für einen Meridianschnitt A-A (eine Ebene gebildet durch Meridianrichtung m und Umfangsrichtung u) mit Blick auf den Schaufelfuß (Statorfuß 19) unterschiedliche denkbare Düsenanordnungen. Es ist somit eine Anordnung mit statoreingebetteter Düse (wandbündig) und Fluidversorgung durch den Statorfuß gemäß der Schnittansicht A-A von Fig. 4a dargestellt. Die linke obere Darstellung betrifft eine meridionale Düsenausrichtung, die rechte obere Darstellung eine schräge Düsenausrichtung, die beiden unteren Darstellungen eine gescherte Düsenausrichtung. Die Düse 21 kann einen rechtwinkligen oder gescherten Grundriss aufweisen, druckseitig oder saugseitig vom Profil positioniert sein, in Meridianrichtung oder gegen diese um den Winkel beta geneigt ausgerichtet sein. Eine Festlegung auf eine bestimmte Fußplattform des Stators 4 gibt es nicht, beispielhaft gezeigt sind eine rechtwinklige und eine schräg gestufte Plattform. Bevorzugterweise ist der Austritt der Düse 21 in der Nähe der Hinterkantenebene des Stators 4 anzuordnen. Die Düsenposition ist durch die Ränder des Statorfußes 19 limitiert. Sie erstreckt sich über einen Teil des Umfangs. Die wandbündige Düse 21 kann entweder durch mechanische oder elektrochemische Bearbeitung direkt in das Material des Stators 4 eingearbeitet oder durch Einsätze im Schaufelfuß (Statorfuß 19) geformt werden.

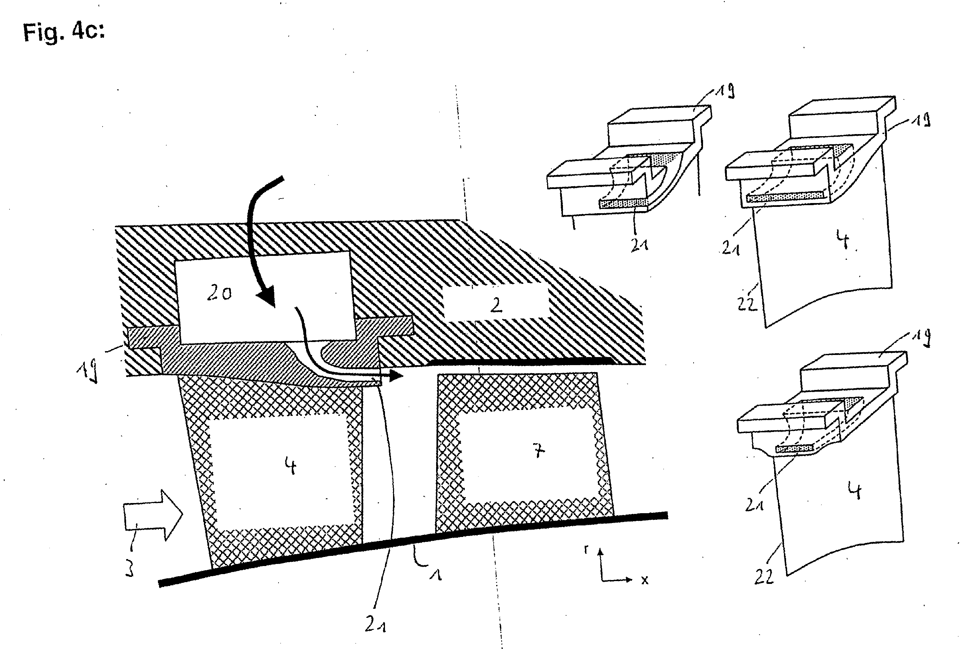

Die Fig. 4c zeigt eine alternative Anordnung eines Stators 4 mit einem nachfolgenden Rotor 7. Im Einzelnen ist eine Anordnung mit statoreingebetteter Düse (vorstehend) und Fluidversorgung durch den Statorfuß, in Meridianansicht, gezeigt, sowie räumliche Ansichten von Statorvarianten. Wie bei den vorgehend beschriebenen Ausführungsbeispielen erfolgt die Fluidversorgung in die Fluidversorgungskammer 20. Hier ist die Düse 21 ebenfalls vollständig in das Statorbauelement eingebettet, besitzt jedoch eine vorstehende, strömungstechnisch sicher zu beherrschende Konfiguration. Der Düsenaustritt befindet sich hier an der in Hauptströmung weisenden Seite des Schaufelfußes (Statorfuß 19). Zur weiteren Verdeutlichung sind auf der rechten Bildseite mehrere mögliche Varianten einer Statorschaufel räumlich dargestellt. Hierbei kann von einer für den Düsenvorsprung notwendigen Erhebung der Plattform entweder der gesamte Umfang oder nur ein Teil des Umfanges betroffen sein. Insbesondere kann die Düse zur einen Seite der Statorplattform (des Statorfußes) hin offen sein, um den Anschluss an den Fuß (und ggf. Düse) einer benachbarten Statorschaufel oder Statorschaufelbaugruppe zu ermöglichen.

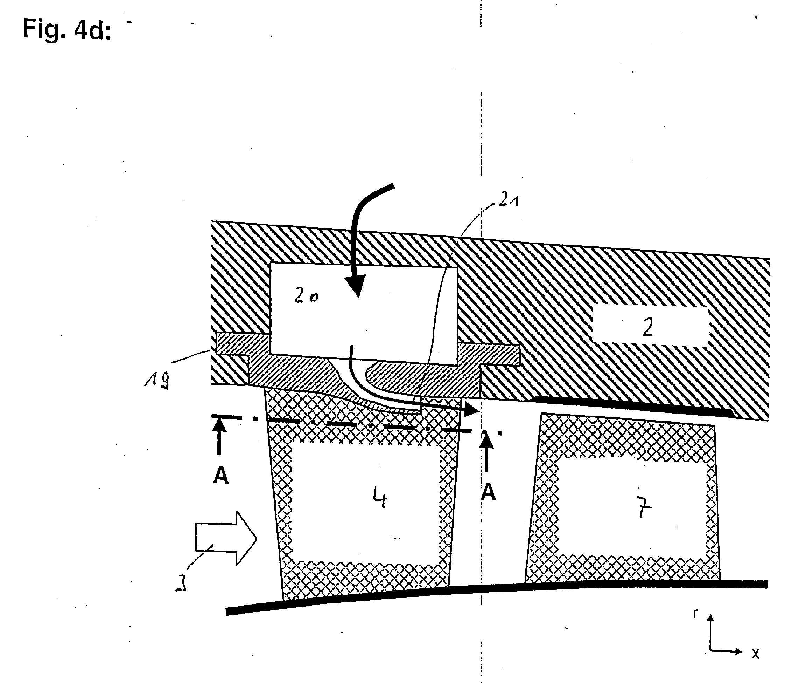

Die Fig. 4d zeigt eine alternative Anordnung, bei der die Düse 21 ebenfalls vollständig in das Statorbauelement eingebettet ist, eine vorstehende Konfiguration besitzt, aber innerhalb der Statorpassage angeordnet ist. Im Einzelnen ist eine Anordnung mit statoreingebetteter Düse (vorstehend) und Fluidversorgung durch den Statorfuß in Meridianansicht gezeigt.

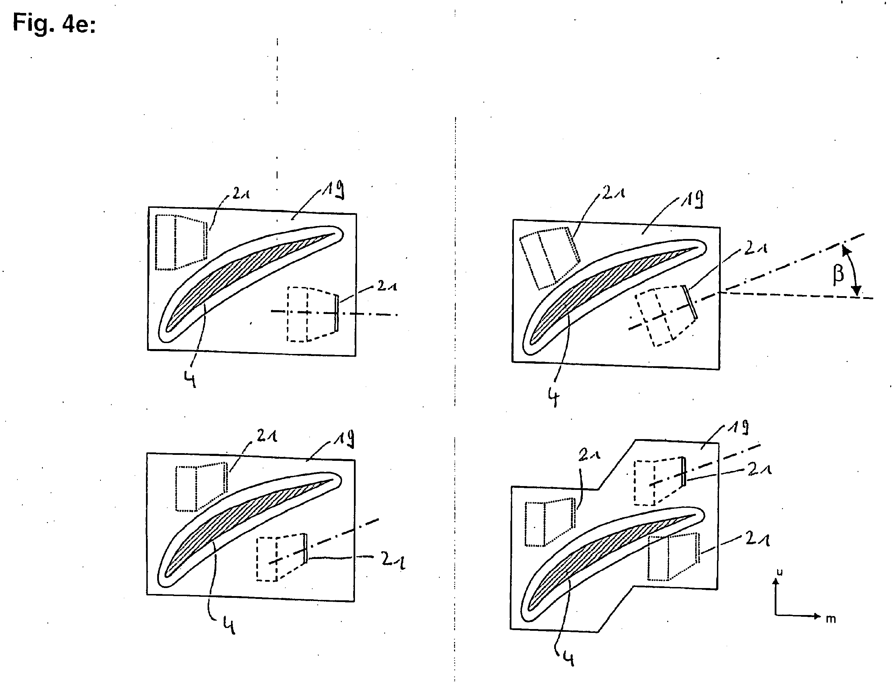

Korrespondierend mit dem Meridianschnitt A-A in Fig. 4d zeigt die Fig. 4e eine Ansicht (eine Ebene, gebildet durch Meridianrichtung m und Umfangsrichtung u) mit Blick auf den Schaufelfuß (Statorfuß 19) unterschiedlicher denkbarer Düsenanordnungen. Im Einzelnen ist eine Anordnung mit eingebetteter Düse (vorstehend) und Fluidversorgung durch den Statorfuß dargestellt. Die linke obere Ansicht zeigt eine meridionale Düsenausrichtung, die rechte obere Ansicht zeigt eine schräge Düsenausrichtung, die beiden unteren Ansichten zeigen eine gescherte Düsenausrichtung. Die Düse 21 kann einen symmetrischen oder unsymmetrischen Grundriss aufweisen, druckseitig oder saugseitig vom Profil positioniert sein, in Meridanrichtung oder gegen diese um den Winkel beta geneigt, ausgerichtet sein. Eine Festlegung auf eine bestimmte Fußplattform des Stators 4 gibt es nicht, beispielhaft gezeigt sind eine rechtwinklige und eine schräg gestufte Plattform.

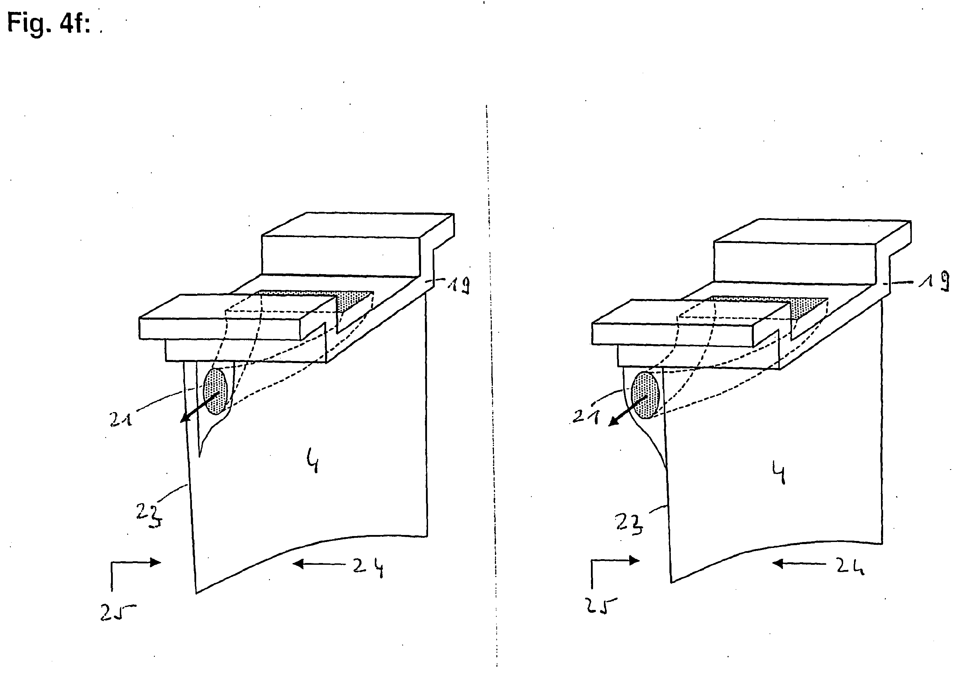

Die Fig. 4f zeigt zwei Varianten der Lösung mit einer Anlehnung des Düsenaustrittes an die Saug- bzw. Druckseite einer Statorschaufel. In der linken Darstellung ist eine druckseitige Anlehnung dargestellt, während die rechte Abbildung eine saugseitige Anlehnung zeigt. Die Hinterkante des Stators ist mit dem Bezugszeichen 23 versehen, der Pfeil 24 zeigt die Druckseite, während der Pfeil 25 die Saugseite darstellt.

Die Fig. 5a zeigt eine erfindungsgemäße Anordnung eines verstellbaren Stators mit einem nachfolgenden Rotor, umgeben von einem Gehäuse. Im Einzelnen ist eine Anordnung mit statoreingebetteter Düse (wandbündig) und Fluidversorgung durch die Statorverstellspindel, in Meridianansicht, dargestellt, sowie eine räumliche Ansicht des Stators. Auch bei diesem Ausführungsbeispiel erfolgt die Fluidversorgung in die Fluidversorgungskammer 20. In der räumlichen Darstellung bezeichnet das Bezugszeichen 22 die Vorderkante und das Bezugszeichen 23 die Hinterkante des Stators 4. Der Stator ist drehbar im Gehäuse gelagert. Zur weiteren Verdeutlichung ist auf der rechten Bildseite eine Statorschaufel räumlich dargestellt. Das Gehäuse bildet angrenzend an die Verstellspindel eine Fluidversorgungskammer, die über einen Strömungsweg durch die hohle Verstellspindel, den runden Statorfüß sowie eine Düse in den Hauptströmungspfad mündet. Dabei ist die Düse vollständig in das Statorbauelement eingebettet und besitzt eine wandbündige, besonders störungsarme Konfiguration. Fluid strömt so aus der Versorgungskammer durch den Schaufelfuß (Statorfuß 19) in den Hauptströmungspfad auf die Spitze des Rotors zu. Bevorzugterweise ist der Austritt der Düse in der Nähe der Hinterkantenebene des Stators anzuordnen. Die Düsenposition ist durch die Ränder des Statorfußes limitiert. Sie erstreckt sich über einen Teil des Umfangs. Erfindungsgemäß kann die Düse entweder durch mechanische oder elektrochemische Bearbeitung direkt in das Material des Stators eingearbeitet oder durch Einsätze im Schaufelfuß (Statorfuß 19) geformt werden.

Die Fig. 5b zeigt eine erfindungsgemäße Anordnung eines verstellbaren Stators mit einem nachfolgenden Rotor, bei der eine vorstehende Düse vorgesehen ist. Eine Verdeutlichung ergibt die räumliche Darstellung des verstellbaren Stators in der rechten Bildhälfte. Es ist somit eine Anordnung mit statoreingebetteter Düse (vorstehend) und Fluidversorgung durch die Statorverstellspindel, in Meridanansicht, gezeigt.

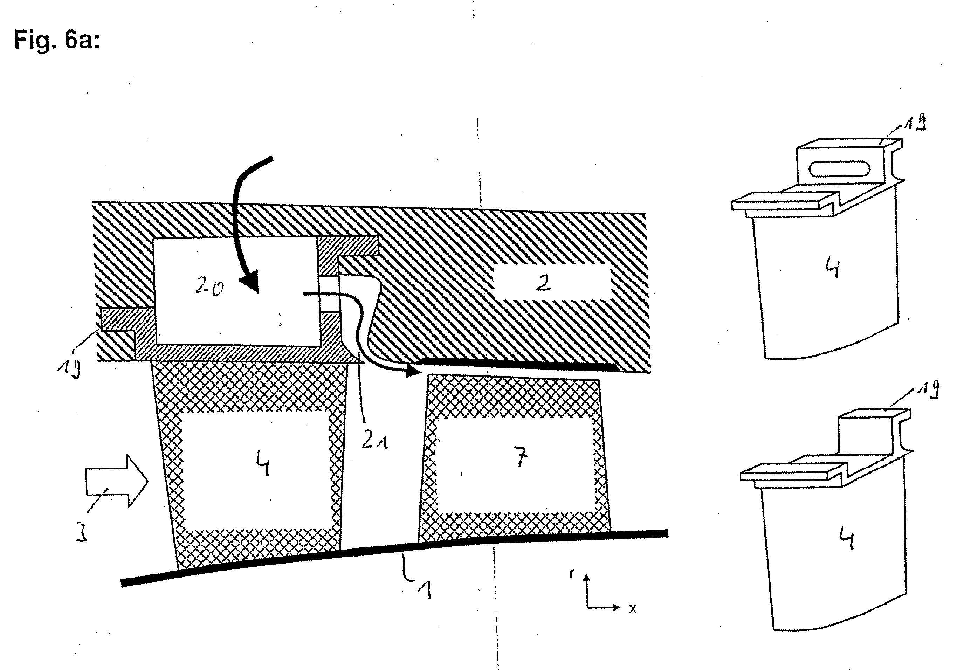

Die Fig. 6a zeigt eine Anordnung eines Stators 4 mit einem nachfolgenden Rotor 7, umgeben von einem Gehäuse. Die Anordnung zeigt eine wandbündige, statorangrenzende Düse und eine Fluidversorgung durch den Statorfuß, ebenfalls in Meridianansicht. Der Stator 4 besitzt eine feste Verbindung zum Gehäuse 2. Der Statorfuß 19 und das Gehäuse 2 bilden eine Fluidversorgungskammer 20, die über eine Öffnung zunächst mit einem von Stator 4 und Gehäuse 2 gemeinsam gebildeten Hohlraum verbunden ist. Eine sich anschließende Düse 21 wird ebenfalls teilweise vom Stator 4 begrenzt. Die Düse 21 besitzt eine wandbündige, besonders störungsarme Konfiguration. Fluid strömt so aus der Versorgungskammer durch den Schaufelfuß (Statorfuß 19) und die statorangrenzende Düse 21 in den Hauptströmungspfad auf die Spitze des Rotors 7 zu. Zur weiteren Verdeutlichung sind auf der rechten Bildseite zwei mögliche Varianten der Statorschaufel räumlich dargestellt. Wie zu erkennen ist, kann die Öffnung im Statorfuß 19, die zur Versorgung der statorangrenzenden Düse 21 notwendig ist, entweder durch ein Loch in der Flanke des Fußes oder durch eine Teilaussparung der Flanke selbst realisiert werden.

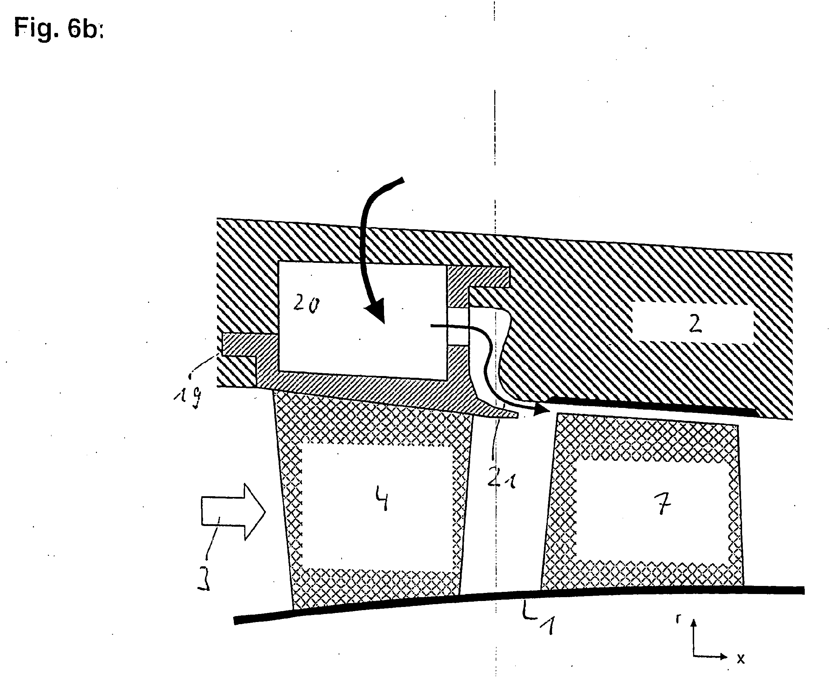

Die Fig. 6b zeigt eine Anordnung für den Fall einer vorstehenden Düse 21, welche statorangrenzend angeordnet ist und durch den Statorfuß mit Fluid versorgt wird.

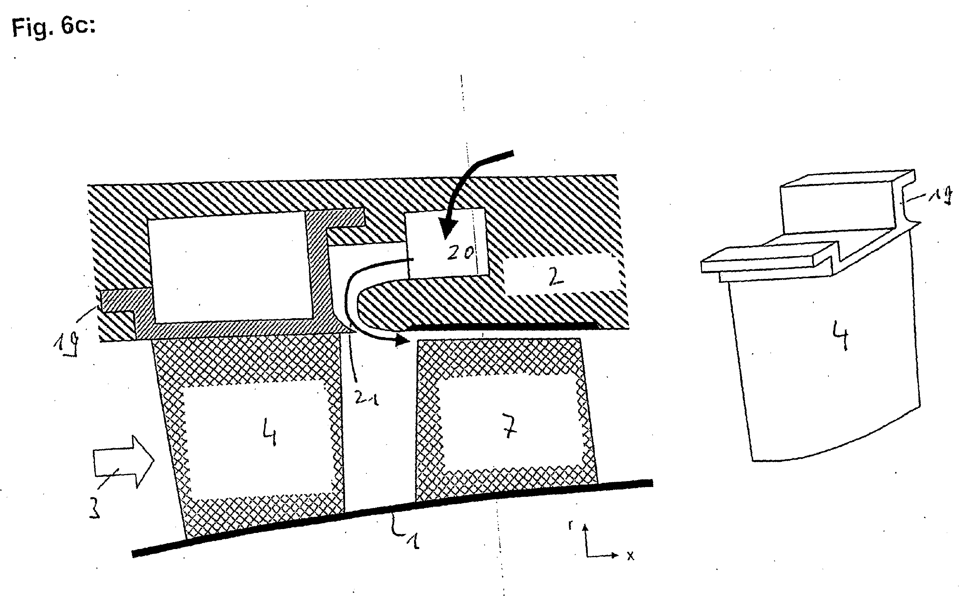

Die Fig. 6c zeigt eine Anordnung für den Fall einer wandbündigen, statorangrenzenden Düse 21, die über eine Fluidversorgungskammer in der Gehäuseperipherie gespeist wird.

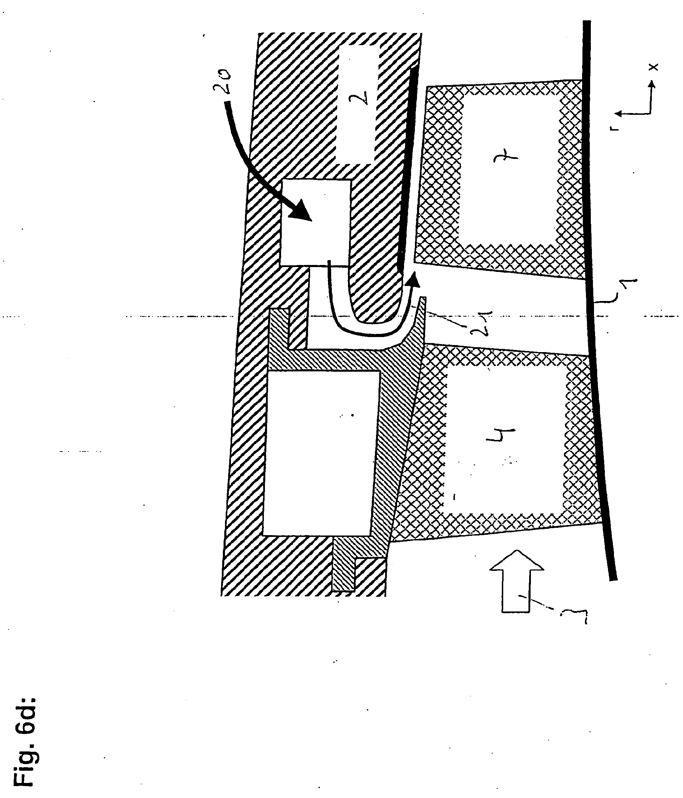

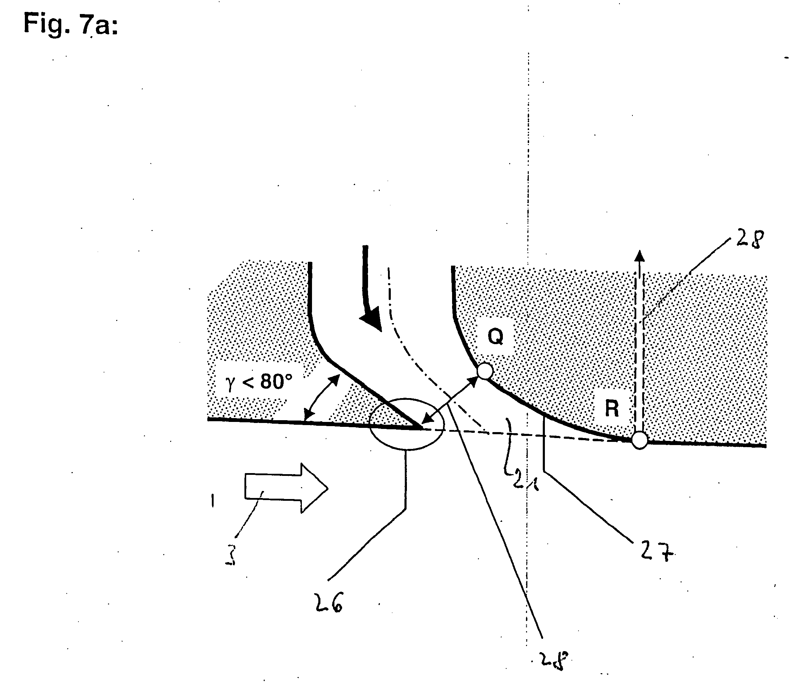

Die Fig. 6d zeigt eine Anordnung für den Fall einer vorstehenden, statorangrenzenden Düse 21, die über eine Fluidversorgungskammer in der Gehäuseperipherie gespeist wird. Besonders vorteilhaft ist es, wenn die wandbündige Düse 21 nach weiteren Regeln gestaltet wird. Die Fig. 7a zeigt eine stark vergrößerte Darstellung der Düsenmündung am Hauptströmungspfad. Demnach sollte die linke Kontur der Düse unter einem Winkel von gamma<80° gegen die Ringkanalkontur geneigt sein. Die sich ergebende Spitze 26 kann scharfkantig belassen, mit einer Fase versehen oder abgerundet werden. Die rechte Kontur 27 der Düse 21 sollte zur fluidbenetzten Seite hin zwischen dem am Engquerschnitt der Düse 21 befindlichen Punkt Q und dem Punkt des Übergangs in die Ringkanalkontur R durchgängig konvex ausgeführt sein. Besonders günstig kann es sein, in naher Umgebung des Punktes R einen relativ zur Düse 21 betrachtet kleinen Kanal 28 zur Absaugung von Fluid vorzusehen. Mit dem Bezugszeichen 28 ist der engste Düsenquerschnitt am Ende der stromauf gelegenen Düsenwandung bezeichnet.

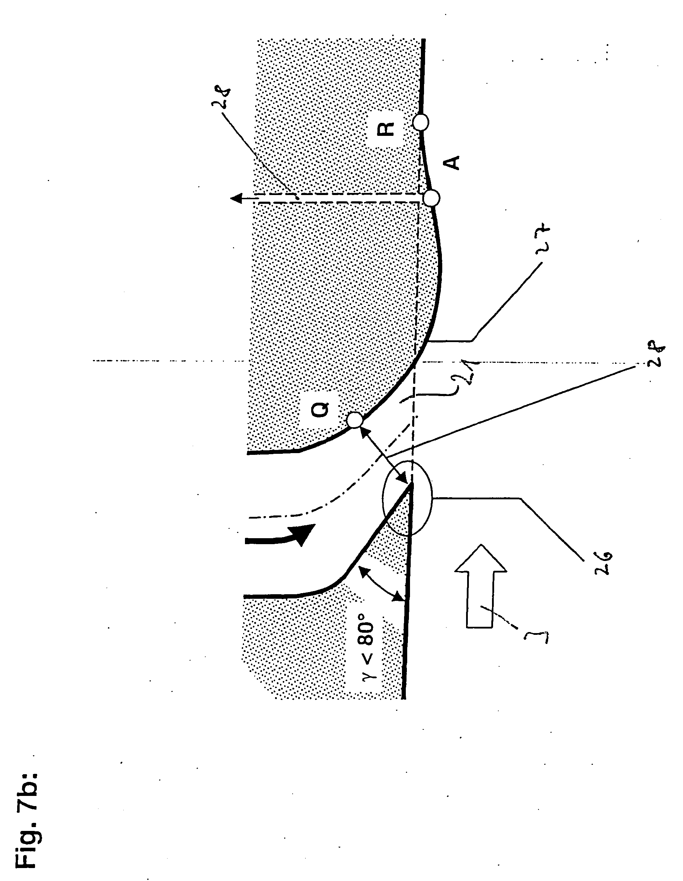

Wie in Fig. 7b dargestellt ist, kann es sich besonders vorteilhaft auswirken, die rechte Kontur der Düse 21 um einen bestimmten Betrag über die Ringkanalkontur hinausschwingen zu lassen, bevor sie am Punkt R Anschluss findet. Der durchgehend konvexe Konturabschnitt 27 endet in diesem Fall am Punkt A, der vor dem Punkt R angeordnet ist. Eine mögliche Absaugstelle wäre bei der überschwingenden Einmündung der Düse 21 in naher Umgebung des Punktes A des Krümmungswechsels zu platzieren.

Bei der erfindungsgemäßen Strömungsarbeitsmaschine wird somit ein bislang unerreichtes Maß an raumsparender Randströmungsbeeinflussung erzielt, die zudem eine bedeutende Reduzierung des Bau- und Kostenaufwandes ermöglicht (weniger variable Statoren und Zwischenstufenabblasung), der an Maschinen nach dem Stand der Technik zur Bereitstellung einen genügenden Betriebsbereiches erforderlich wäre. Je nach Ausnutzungsgrad des Konzeptes sind Reduktionen der Kosten und des Gewichts für die Strömungsarbeitsmaschine von 10 % bis 20 % zu erzielen. Hinzu kommt eine Verbesserung des Wirkungsgrades, die mit 0,2 % bis 0,5 % zu beziffern ist.

### Bezugszeichenliste

- 1: Nabe
- 2: Gehäuse
- 3: Hauptströmungsrichtung
- 4: Stator
- 5: Stator
- 6: Stator
- 7: Rotor
- 8: Rotor
- 9: Fluidabblasevorrichtung
- 10: Statorverstellung
- 11: Statorintegrierte Randstrahlerzeugung
- 12: Leitung
- 13: Kammer
- 14: Filtervorrichtung
- 15: Drosselorgan/Ventil
- 16: Mechanismus
- 17: Ringkanal
- 18: Maschinenachse
- 19: Statorfuß
- 20: Fluidversorgungskammer
- 21: Düse
- 22: Vorderkante
- 23: Hinterkante
- 24: Druckseite
- 25: Saugseite
- 26: Spitzen
- 27: Konturabschnitt
- 28: Kanal

## Patentansprüche

1. Verdichter mit zumindest einem Stator (4) und mindestens einem stromab angeordneten Rotor (7), wobei der Stator (4) mit Statorschaufeln versehen ist und der Rotor (7) mehrere an einer rotierenden Welle befestigte Rotorschaufeln umfasst, wobei ein Gehäuse (2) die Durchströmung des Rotors (7) und des Stators (4) mit einem Fluid nach außen begrenzt, wobei im Bereich mindestens einer Schaufel des Stators (4) Mittel zur Randstrahlerzeugung mit zumindest einer Fluid an der radial äußeren Begrenzung des Hauptströmungspfades ausleitenden Düse (21) vorgesehen sind, wobei die Düse (21) in der Wandung des Gehäuses (2) ausgebildet ist und wobei die Schaufel des Stators (4) verstellbar ist und die Düse (21) zusammen mit der Schaufel des Stators (4) verstellbar ist.

2. Verdichter nach Anspruch 1, **dadurch gekennzeichnet, dass** im Gehäuse (2) eine mit der Düse (21) verbundene Fluidversorgungskammer (20) ausgebildet ist.

3. Verdichter nach Anspruch 1, **dadurch gekennzeichnet, dass** in einer mit der Düse (21) verbundenen Leitung (12) ein Drosselorgan oder Ventil (15) angeordnet ist.

4. Verdichter nach einem der Ansprüche 1 bis 3, **dadurch gekennzeichnet, dass** die Düse (21) druckseitig vom Profil der Schaufel des Stators (4) angeordnet ist.

5. Verdichter nach einem der Ansprüche 1 bis 3, **dadurch gekennzeichnet, dass** die Düse (21) saugseitig vom Profil der Schaufel des Stators (4) angeordnet ist.

6. Verdichter nach einem der Ansprüche 1 bis 3, **dadurch gekennzeichnet, dass** das Drosselorgan oder Ventil (15)über eine mechanisierte, hydraulische oder pneumatische Verbindung zu einem Mechanismus zur Bewegung von Verstellstatoren gesteuert wird.

7. Verdichter nach Anspruch 1, **dadurch gekennzeichnet, dass** in einer mit der Düse (21) verbundenen Leitung oder Kammer eine Filtervorrichtung angeordnet ist.

## Claims

1. Compressor with at least one stator (4) and at least one downstream rotor (7), with the stator (4) being provided with stator vanes and the rotor (7) including several rotor blades attached to a rotating shaft, with a casing (2) confining the passage of fluid through the rotor (7) and the stator (4) in the outward direction, with means for peripheral jet creation being provided in the area of at least one vane of the stator (4), with at least one nozzle (21) issuing fluid at the radially outer boundary of the main flow path, with the nozzle (21) being formed in the wall of the casing (2) and with the vane of the stator (4) being variable and the nozzle (21) being variable together with the vane of the stator (4).

2. Compressor in accordance with Claim 1, **characterized in that** a fluid supply chamber (20) which connects to the nozzle (21) is provided in the casing (2).

3. Compressor in accordance with Claim 1, **characterized in that** a throttling element or valve (15) is arranged in a line (12) connected to the nozzle (21).

4. Compressor in accordance with one of the Claims 1 to 3, **characterized in that** the nozzle (21) is arranged at the pressure side of the profile of the vane of the stator (4).

5. Compressor in accordance with one of the Claims 1 to 3, **characterized in that** the nozzle (21) is arranged at the suction side of the profile of the vane of the stator (4).

6. Compressor in accordance with one of the Claims 1 to 3, **characterized in that** the throttling element or valve (15) is controlled via a mechanical, hydraulic or pneumatic connection to a mechanism for the actuation of variable stators.

7. Compressor in accordance with Claim 1, **characterized in that** a filter element is arranged in a line or chamber connected to the nozzle (21).

## Revendications

1. Compresseur avec au moins un stator (4), et au moins un rotor (7) placé en aval, dans lequel le stator (4) est muni d'aubes de stator et le rotor (7) comprend plusieurs aubes de rotor fixées sur un arbre rotatif, sachant qu'un carter (2) limite vers l'extérieur la traversée du rotor (7) et du stator (4) par un fluide, que dans la zone d'au moins une aube du stator (4) sont prévus des moyens pour générer un flux périphérique avec au moins une buse (21) dérivant du fluide sur la limite extérieure radiale de la voie d'écoulement principale, que la buse (21) est formée dans la paroi du carter (2), que l'aube du stator (4) est réglable et que la buse (21) est réglable conjointement avec l'aube du stator (4).

2. Compresseur selon la revendication n° 1, **caractérisé en ce qu'**une chambre d'alimentation en fluide (20) reliée à la buse (21) est formée dans le carter (2).

3. Compresseur selon la revendication n° 1, **caractérisé en ce qu'**un élément d'étranglement ou une vanne (15) est disposé(e) dans une conduite (12) reliée à la buse (21).

4. Compresseur selon une des revendications n° 1 à n° 3, **caractérisé en ce que** la buse (21) est disposée du côté pression du profil de l'aube du stator (4).

5. Compresseur selon une des revendications n° 1 à n° 3, **caractérisé en ce que** la buse (21) est disposée du côté aspiration du profil de l'aube du stator (4).

6. Compresseur selon une des revendications n° 1 à n° 3, **caractérisé en ce que** l'élément d'étranglement ou la vanne (15) est commandé(e) par l'intermédiaire d'une liaison mécanique, hydraulique ou pneumatique vers un mécanisme destiné à mouvoir des stators réglables.

7. Compresseur selon la revendication n° 1, **caractérisé en ce qu'**un dispositif de filtrage est placé dans une conduite ou une chambre reliée à la buse (21).
